# EUROPEAN PATENT SPECIFICATION

(11) **EP 3 588 633 B1**
(45) Date of publication and mention of the grant of the patent: **15.01.2025**
(21) Application number: 18791298.5
(22) Date of filing: 25.04.2018
(51) Int. Cl.: H01M 4/14, H01M 4/62, H01M 10/06

(54) **LEAD ACID BATTERY**
BLEI-SÄURE-AKKUMULATOR
BATTERIE D'ACCUMULATEURS AU PLOMB

(30) Priority: 28.04.2017 JP 2017090844
(43) Date of publication of application: 01.01.2020
(73) Proprietor: GS Yuasa International Ltd., Kyoto-shi, Kyoto 601-8520 (JP)
(72) Inventor: MIZOGUCHI, Yasunori, Kyoto-shi, Kyoto 601-8520 (JP)
(74) Representative: Isarpatent
(86) International application number: PCT/JP2018/016696
(87) International publication number: WO 2018/199124

(56) References cited:
- EP-A1- 3 588 639
- EP-A1- 3 595 054
- WO-A1-2012/017702
- AU-A1- 2016 200 591
- JP-A- 2016 154 131
- JP-A- H10 144 305
- ANONYMOUS: "Lignin and lignosulfonates -- From the tree to the battery (Journal Article) | OSTI.GOV", 1 October 1999 (1999-10-01), XP055748487, Retrieved from the Internet <URL:https://www.osti.gov/biblio/20006013-lignin-lignosulfonates-from-tree-battery> [retrieved on 20201109]
- "Polymers and Polymeric Composites: A Reference Series", 1 January 2016, SPRINGER BERLIN HEIDELBERG, Berlin, Heidelberg, ISBN: 978-3-642-37179-0, article MICHAEL E. SPAHR ET AL: "Carbon Black for Electrically Conductive Polymer Applications", pages: 1 - 26, XP055755914, DOI: 10.1007/978-3-642-37179-0_32-2

## Description

### TECHNICAL FIELD

The present invention relates to a lead-acid battery.

### BACKGROUND ART

A lead-acid battery is used in various applications in addition to in-vehicle and industrial applications. The lead-acid battery includes a negative electrode plate, a positive electrode plate, and an electrolyte solution. The negative electrode plate includes a negative current collector and a negative electrode material. An organic expander is added to the negative electrode material. For example, Patent Document 1 proposes addition of lignosulfonate to a negative active paste material in the production of a negative electrode plate.

AU2016200591A1 describes a lead-acid battery including a negative electrode material containing graphite and barium sulfate. A ratio S/W of an average plate interval S between a negative electrode plate and a positive electrode plate, to a mass W of the negative electrode material per one negative electrode plate is 0.01 mm/g or more.

### PRIOR ART DOCUMENT

### PATENT DOCUMENT

Patent Document 1: JP 2014-527682 W

### SUMMARY OF THE INVENTION

### PROBLEMS TO BE SOLVED BY THE INVENTION

The lead-acid battery is sometimes used in a poor charged state referred to as a partial state of charge (PSOC). For example, when the lead-acid battery is used as power sources for starting automobiles or motorcycles and the like such as charge control vehicles and idling stop (IS) vehicles, or industrial energy storage apparatuses used for storing natural energy such as sunlight and wind power, the lead-acid battery is often used in a PSOC state. Therefore, the lead-acid battery is required to have high life performance in the PSOC cycle.

In order to improve the PSOC life performance, it is effective to increase the amount of carbon black added to the negative electrode material. However, lignin (lignosulfonic acid or a salt thereof) of the organic expander is adsorbed to carbon black, so that the addition of a large amount of carbon black causes a decreased specific surface area of the negative electrode material, which causes deteriorated low-temperature high-rate performance. In order to suppress the deteriorated low-temperature high-rate performance, it is conceivable to increase the amount of the lignin. However, the addition of a large amount of lignin causes deteriorated charge acceptance performance.

Thus, it is difficult to improve the PSOC life performance without impairing the low-temperature high-rate performance and the charge acceptance performance.

### MEANS FOR SOLVING THE PROBLEMS

According to claim 1, the present invention provides a lead-acid battery including: a negative electrode plate; a positive electrode plate; and an electrolyte solution, wherein: the negative electrode plate contains a negative electrode material containing a carbon material and an organic expander; the carbon material contains a first carbon material having a particle size of 32 pm or more, and a second carbon material having a particle size of less than 32 pm; wherein the particle size of each of the carbon materials is determined based on a size of an opening of a sieve as described below; a ratio of powder resistance R2 of the second carbon material to powder resistance R1 of the first carbon material: R2/R1 is 15 or more and 155 or less; wherein the powder resistance is measured as described below; the first carbon material contains at least graphite, and the second carbon material contains at least carbon black; the organic expander contains lignosulfonic acid or a salt thereof and a content of the organic expander in the negative electrode material is 0.03 mass% or more and 0.8 mass% or less.

### ADVANTAGES OF THE INVENTION

The present invention can provide a lead-acid battery having improved PSOC lifetime performance without impairing low-temperature high-rate performance and charge acceptance performance.

### BRIEF DESCRIPTION OF THE DRAWINGS

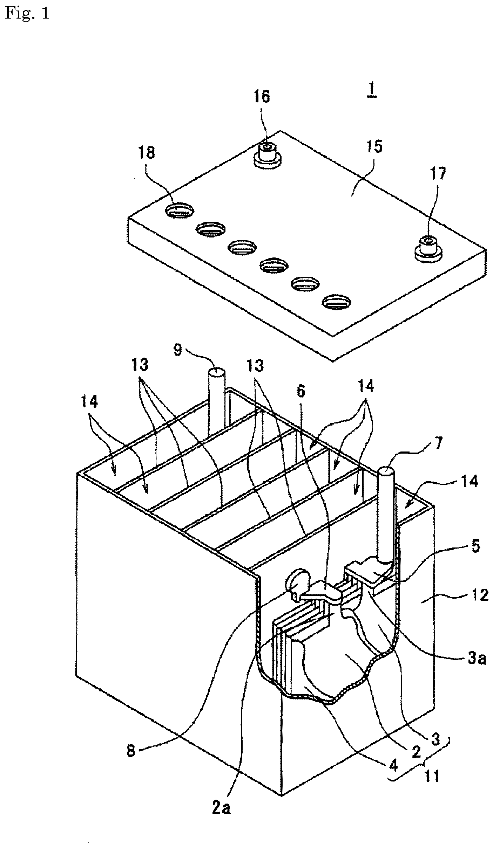

Fig. 1 is an exploded perspective view with a part cut away, showing an external appearance and internal structure of a lead-acid battery according to an embodiment of the present invention.

### MODE FOR CARRYING OUT THE INVENTION

The present invention provides a lead-acid battery, and the lead-acid battery includes a negative electrode plate, a positive electrode plate, and an electrolyte solution, as defined in claim 1. The negative electrode plate contains a negative electrode material containing a carbon material and an organic expander. The carbon material contains a first carbon material having a particle size of 32 pm or more, and a second carbon material having a particle size of less than 32 pm. A ratio of powder resistance R2 of the second carbon material to powder resistance R1 of the first carbon material: R2/R1 is 15 or more and 155 or less. The first carbon material contains at least graphite, and the second carbon material contains at least carbon black. The organic expander contains lignosulfonic acid or a salt thereof, and a content of the organic expander in the negative electrode material is 0.03 mass% or more and 0.8 mass% or less.

Two types of carbon materials having a powder resistance ratio in a specific range and having different particle sizes are used in a combination together with a small amount of organic expander, whereby life performance in a PSOC cycle can be improved. The two types of carbon materials having a powder resistance ratio in a specific range and having different particle sizes are used in a combination, whereby high low-temperature high-rate performance can be maintained even when the additive amount of the organic expander is a small amount of 0.03 mass% or more and 0.8 mass% or less. The additive amount of the organic expander is a small amount of 0.8 mass% or less, whereby deterioration in charge acceptance performance due to an increase in the additive amount of the organic expander is avoided.

Carbon materials having various powder resistances have been generally known. It has been known that the powder resistance of a powder material varies depending on the shape, size, internal structure, and/or crystallinity of the particle, and the like. In the conventional technical common sense, the powder resistance of the carbon material is not directly related to the resistance of the negative electrode plate, and it is not considered that the powder resistance affects the PSOC life performance and the low-temperature high-rate performance.

Meanwhile, according to the above aspect of the present invention, the first and second carbon materials having a powder resistance ratio in a specific range and having different particle sizes are used in a combination together with a small amount of organic expander, whereby the low-temperature high-rate performance is improved. This is considered to be because, when the first carbon material and the second carbon material are used in a combination, the adsorption of the organic expander to the carbon material is suppressed as compared to a case where the amount of the second carbon material is increased, whereby the pore structure of the negative electrode material is maintained with even a small amount of organic expander.

In the above aspect of the present invention, by controlling a powder resistance ratio R2/R1 between the first and second carbon materials contained in the negative electrode plate within a range of 15 to 155, high PSOC life performance can be obtained. This is presumably due to the following reasons. First, by controlling the powder resistance ratio R2/R1 within the above range, a conductive network is easily formed in the negative electrode material. Even a small amount of organic expander exhibits a sufficient effect, whereby the pore structure of the negative electrode material is maintained. Therefore, the formed conductive network is easily maintained even if the PSOC cycle is performed. That is, it can be said that the effect of the organic expander is improved by combining the first and second carbon materials having the powder resistance ratio as described above.

### (Organic Expander)

The organic expander contains lignosulfonic acid or a salt thereof. Examples of the salt of lignosulfonic acid include alkali metal salts such as a sodium salt. For example, "Vanillex N" (trade name) manufactured by Nippon Paper Industries Co., Ltd. is used.

The content of the organic expander in the negative electrode material is 0.03 mass% or more and 0.8 mass% or less. When the content of the organic expander in the negative electrode material is less than 0.03 mass%, the low-temperature high-rate performance is deteriorated. When the content of the organic expander in the negative electrode material is more than 0.8 mass%, the charge acceptance performance is deteriorated. The content of the organic expander in the negative electrode material is a content in the negative electrode material collected by a method described later from a fully charged lead-acid battery that has been formed.

The content of the organic expander in the negative electrode material is preferably 0.03 mass% or more, and more preferably 0.25 mass% or more. It is preferable that the content is 0.4 mass% or less. These upper and lower limits can be optionally combined. In this case, excellent PSOC life performance, low-temperature high-rate performance, and charge acceptance performance are obtained in a well-balanced manner.

A method for analyzing the organic expander and a method for determining the physical properties thereof will be described below.
(A) Analysis of Organic Expander
(A-1) Identification of Kind of Organic Expander

The kind of the organic expander in the negative electrode material is identified as follows.

A fully charged lead-acid battery is disassembled to take out a negative electrode plate, and a sulfuric acid content is removed by washing with water, followed by vacuum drying (drying under a pressure lower than atmospheric pressure). A negative electrode material containing an active material is separated from the negative electrode plate, and an organic expander is extracted by immersing the negative electrode material in a 1 mol/L NaOH aqueous solution. A solution obtained by removing insoluble components by filtration from the extraction liquid is desalted, and then freeze-dried to obtain a powder sample. For desalting, a desalting column or an ion exchange membrane is used. Information obtained from infrared spectrum and NMR spectrum measured using the powder sample of the organic expander thus obtained, and UV-visible absorption spectrum measured with an ultraviolet-visible absorptiometer after the powder sample is diluted with distilled water, and the like is used to identify the kind of the organic expander.

In the present specification, in the case of a flooded-type battery, a fully charged state of the lead-acid battery is a state where constant current charge is performed until reaching 2.5 V/cell at a current of 0.2 CAin a water bath at 25°C, and constant current charge is then performed at 0.2 CA for 2 hours. In the case of a valve regulated battery, a fully charged state is a state where constant current constant voltage charge of 2.23 V/cell is performed at a constant current of 0.2 CAin an air tank at 25°C, and charge is finished when a charge current during the constant voltage charge is 1 mCA or less.

In the present specification, 1 CA is a current value (A) having the same value as the nominal capacity (Ah) of the battery. For example, in the case of a battery having a nominal capacity of 30 Ah, 1 CA is 30 A, and 1 mCAis 30 mA.

### (A-2) Measurement of Content of Organic Expander

The content of the organic expander in the negative electrode material is measured as follows.

A fully charged lead-acid battery is disassembled to take out a negative electrode plate, and a sulfuric acid content is removed by washing with water, followed by vacuum drying (drying under a pressure lower than atmospheric pressure). A negative electrode material is separated from the negative electrode plate, and 100 g of the negative electrode material is immersed in 300 mL of a 1 mol/L NaOH aqueous solution to extract an organic expander. Insoluble components are removed from the extract by filtration, and UV-visible absorption spectrum is then measured. The content of the organic expander in the negative electrode material is measured using a calibration curve prepared in advance.

When the content of an organic expander in a battery manufactured by another company is measured, and the structural formula of the organic expander cannot be strictly specified, so that the same organic expander cannot be used for the calibration curve, a calibration curve is prepared using the organic expander extracted from the negative electrode of the battery and an organic expander showing UV-visible absorption spectrum, infrared spectroscopic spectrum, and NMR spectrum and the like having similar shapes and being capable of being separately obtained, whereby the content of the organic expander is measured using visible absorption spectrum.

### (Carbon Material)

The carbon material contains a first carbon material having a particle size of 32 µm or more, and a second carbon material having a particle size of less than 32 µm. The first carbon material and the second carbon material are separated and distinguished in a procedure described later.

Examples of each carbon material include carbon black, graphite, hard carbon, and soft carbon. Examples of the carbon black include acetylene black, ketjen black, furnace black, and lamp black. The graphite may be a carbon material including a graphite type crystal structure, and may be any of artificial graphite and natural graphite.

In the first carbon material, a carbon material having an intensity ratio I_{D}/I_{G} of 0 or more and 0.9 or less is taken as graphite. The intensity ratio I_{D}/I_{G} is an intensity ratio of a peak (D band) appearing in a range of 1300 cm⁻¹ or more and 1350 cm⁻¹ or less to a peak (G band) appearing in a range of 1550 cm⁻¹ or more and 1600 cm⁻¹ or less in a Raman spectrum.

A ratio of powder resistance R2 of the second carbon material to powder resistance R1 of the first carbon material: R2/R1 is 15 or more and 155 or less. As the powder resistance ratio R2/R1 is increased, the amount of lignin adsorbed by the carbon material is decreased. When the powder resistance ratio R2/R1 is less than 15, the low-temperature high-rate performance is deteriorated. When the powder resistance ratio R2/R1 is more than 155, the charge acceptance performance is deteriorated. The powder resistance ratio R2/R1 can be adjusted, for example, by changing the type, particle size, specific surface area, and/or aspect ratio and the like of each carbon material used for producing the negative electrode material. As the first carbon material, for example, at least one selected from the group consisting of graphite, hard carbon, and soft carbon is preferable. According to the present invention, the first carbon material contains at least graphite. According to the present invention, the second carbon material contains at least carbon black. When these carbon materials are used, the powder resistance ratio R2/R1 is easily adjusted.

The powder resistance ratio R2/R1 is preferably 50 or more and 110 or less. In this case, excellent PSOC life performance, low-temperature high-rate performance, and charge acceptance performance are obtained in a well-balanced manner. When the powder resistance ratio R2/R1 is 50 or more, the PSOC life performance and the charge acceptance performance can be further improved. When the powder resistance ratio R2/R1 is 110 or more, the PSOC life performance and the low-temperature high-rate performance can be further improved.

When the content of the organic expander in the negative electrode material is 0.03 mass% or more and 0.25 mass% or less, the powder resistance ratio R2/R1 is preferably 80 or more and 155 or less, and more preferably 80 or more and 110 or less. When the content of the organic expander in the negative electrode material is 0.4 mass% or more and 0.8 mass% or less, the powder resistance ratio R2/R1 is preferably 15 or more and 85 or less, and more preferably 50 or more and 85 or less. In the case of a combination of the range of the content of the organic expander in the negative electrode material and the range of the powder resistance ratio R2/R1, the PSOC life performance can be further improved.

A ratio of a specific surface area S2 of the second carbon material to a specific surface area S1 of the first carbon material: S2/S1 is, for example, 10 or more and 400 or less. The specific surface area ratio S2/S1 is preferably 20 or more and 240 or less. In this case, excellent PSOC life performance, low-temperature high-rate performance, and charge acceptance performance are obtained in a well-balanced manner. When the specific surface area ratio S2/S1 is 20 or more, the PSOC life performance can be further improved. When the specific surface area ratio S2/S1 is 240 or less, the specific surface area of each carbon material is in an appropriate range, whereby the adsorption of the organic expander is further suppressed, which provides further improved low-temperature high-rate performance. When the specific surface area ratio S2/S 1 is 20 or more and 240 or less, the reductive reaction of lead sulfate easily proceeds, whereby the charge acceptance performance is further improved while high PSOC life performance is secured. The specific surface area ratio S2/S1 is preferably 100 or more and 240 or less, and more preferably 110 or more and 240 or less. In this case, the PSOC life performance and the charge acceptance performance can be further improved while the low-temperature high-rate performance is maintained.

The average aspect ratio of the first carbon material is, for example, 1 or more and 200 or less. The average aspect ratio of the first carbon material is preferably 1 or more, and more preferably 1.5 or more. The average aspect ratio is preferably 100 or less, more preferably 35 or less, and still more preferably 30 or less. These upper and lower limits can be optionally combined. When the average aspect ratio of the first carbon material is 1.5 or more and 30 or less, the PSOC life performance can be further improved while good low-temperature high-rate performance and charge acceptance performance are maintained. This is considered to be because when the average aspect ratio is in such a range, a conductive network is easily formed in the negative electrode material, and the formed conductive network is easily maintained.

When the average aspect ratio of the first carbon material is 1.5 or more, the outflow of the carbon material to the electrolyte solution due to repeated charge and discharge is suppressed, whereby the effect of improving the PSOC life performance can be further improved. When the average aspect ratio of the first carbon material is 30 or less, the adhesion between active material particles is easily secured, whereby the occurrence of cracks in the negative electrode plate is suppressed, which allows the deterioration of the life performance to be suppressed.

The content of the first carbon material in the negative electrode material is, for example, 0.05 mass% or more and 3.0 mass% or less, preferably 0.1 mass% or more, and more preferably 0.4 mass% or more. The content is preferably 2.0 mass% or less. These upper and lower limits can be optionally combined. When the content of the first carbon material in the negative electrode material is 0.05 mass% or more, the PSOC life performance can be further improved. When the content of the first carbon material in the negative electrode material is 3.0 mass% or less, the adhesion between active material particles is easily secured, whereby the occurrence of cracks in the negative electrode plate is suppressed, which allows the deterioration of the life performance to be suppressed.

The content of the second carbon material in the negative electrode material is, for example, 0.03 mass% or more and 3.0 mass% or less, and preferably 0.05 mass% or more. The content is preferably 1.0 mass% or less, and more preferably 0.5 mass% or less. These upper and lower limits can be optionally combined. When the content of the second carbon material in the negative electrode material is 0.03 mass% or more, the PSOC life performance can be further improved. When the content of the second carbon material in the negative electrode material is 3.0 mass% or less, the adsorption amount of the organic expander is further reduced, whereby the low-temperature high-rate performance can be further improved.

The content of each carbon material in the negative electrode material is determined in a procedure (B-1) described later.

A method for determining or analyzing the physical properties of the carbon material will be described below.

### (B) Analysis of Carbon Material

### (B-1) Separation of Carbon Material

A fully charged lead-acid battery is disassembled to take out a negative electrode plate that has been formed, and sulfuric acid is removed by washing with water, followed by vacuum drying (drying under a pressure lower than atmospheric pressure). Next, a negative electrode material is collected from the dried negative electrode plate, and pulverized. 30 mL of a nitric acid aqueous solution having a concentration of 60 mass% is added to 5 g of the pulverized sample, followed by heating at 70°C. To this mixture, 10 g of disodium ethylenediaminetetraacetate, 30 mL of aqueous ammonia having a concentration of 28 mass%, and 100 mL of water are further added, followed by continuously heating to dissolve soluble components. The sample thus pretreated is collected by filtration. The collected sample is passed through a sieve having an opening of 500 pm, to remove components having a large size such as a reinforcing material, and the components that have passed through the sieve are collected as a carbon material.

When the collected carbon material is wet-sieved using a sieve having an opening of 32 pm, a carbon material remaining on the sieve without passing through the opening of the sieve is a first carbon material, and a carbon material passing through the opening of the sieve is a second carbon material. That is, the particle size of each carbon material is based on the size of the opening of the sieve. For wet-sieving, JIS Z8815: 1994 can be referred to.

Specifically, the carbon material is placed on a sieve having an opening of 32 µm, and the carbon material is sieved by gently shaking the sieve for 5 minutes while ion-exchange water is sprinkled. The first carbon material remaining on the sieve is collected from the sieve by pouring ion-exchange water, and separated from the ion-exchange water by filtration. The second carbon material that has passed through the sieve is collected by filtration using a membrane filter (opening: 0.1 pm) made of nitrocellulose. The collected first and second carbon materials are each dried at a temperature of 110°C for 2 hours. As the sieve having an opening of 32 pm, a sieve including a sieve mesh having a nominal opening of 32 pm as defined in JIS Z 8801-1: 2006 is used.

The content of each carbon material in the negative electrode material is determined by measuring the mass of each carbon material separated in the above procedure, and calculating the ratio (mass%) of the mass in 5 g of the pulverized sample.

### (B-2) Powder Resistance of Carbon Material

The powder resistance R1 of the first carbon material and the powder resistance R2 of the second carbon material are values measured for each of the first carbon material and the second carbon material separated in the procedure (B-1) by a four-point probe method using a low resistivity meter (Loresta-GX MCP-T700, manufactured by Mitsubishi Chemical Analytech Co., Ltd.) with reference to JIS K 7194: 1994 under a pressure of 3.18 MPa in a state where 0.5 g of a sample is placed in a powder resistivity measurement system (MCP-PD51, manufactured by Mitsubishi Chemical Analytech Co., Ltd.).

### (B-3) Specific Surface Area of Carbon Material

The specific surface area S1 of the first carbon material and the specific surface area S2 of the second carbon material are respectively the BET specific surface areas of the first carbon material and the second carbon material. The BET specific surface area is determined by a gas adsorption method using the BET equation using each of the first carbon material and the second carbon material separated in the procedure (B-1). Each carbon material is pretreated by heating in a nitrogen flow at a temperature of 150°C for 1 hour. Using the pretreated carbon material, the BET specific surface area of each carbon material is determined under the following conditions using the following device.
Measuring device: TriStar3000 manufactured by Micromeritics Instrument Corporation
Adsorption gas: Nitrogen gas having a purity of 99.99% or more
Adsorption temperature: Liquid nitrogen boiling point temperature (77 K)
Method for calculating BET specific surface area: with reference to JIS Z 8830: 2013 7.2

### (B-4) Average Aspect Ratio of First Carbon Material

The first carbon material separated in the procedure (B-1) is observed with an optical microscope or an electron microscope. 10 or more optional particles are selected, and a magnified photograph thereof is taken. Next, the photograph of each particle is subjected to image processing to determine a maximum diameter d1 of the particle and a maximum diameter d2 in a direction orthogonal to the maximum diameter d1, and d1 is divided by d2 to determine an aspect ratio of each particle. An average aspect ratio is calculated by averaging the obtained aspect ratios.

The utilization factor of the negative electrode plate is preferably 40% or more and 70% or less, and more preferably 50% or more. The utilization factor is preferably 70% or less, and more preferably 65% or less. These upper and lower limits can be optionally combined.

The utilization factor of the negative electrode plate is increased, whereby the amount of the negative active material can be reduced to provide cost reduction. However, the negative active material is overused during a charge/discharge process, so that the deterioration of the negative electrode plate due to sulfation and the like easily proceeds, which tends to cause deteriorated battery performances such as low-temperature high-rate performance and PSOC life performance.

Meanwhile, even when the utilization factor of the negative electrode plate is high, a negative electrode material containing a small amount of lignin in a specific range and two types of carbon materials having a powder resistance ratio in a specific range and having different particle sizes is used, whereby battery performances such as PSOC life performance can be significantly improved. For example, when the utilization factor of the negative electrode plate is increased to 50% or more, the powder resistance ratio R2/R1 is increased to 100 or more, whereby the effects of improving the low-temperature high-rate performance and the PSOC life performance are more significantly obtained.

(C) A method for measuring the utilization factor of the negative electrode plate will be described below.

The utilization factor of the negative electrode plate is determined from the following formula. Utilization Factor of Negative Electrode Plate (%) = (Nominal Capacity/Negative electrode theoretical capacity) × 100

The negative electrode theoretical capacity is determined from the following formula. Negative Electrode Theoretical Capacity (Ah) = Mass of Negative Active Material in Negative Electrode Plate (g) × Theoretical Capacity per 1 g of Negative Active Material (Ah)

The theoretical capacity per 1 g of the negative active material (Pb) is 0.259 Ah. As the mass of the negative active material is less, the utilization factor of the negative electrode is higher.

The mass of the negative active material in the negative electrode plate is determined in the following procedure.

First, a fully charged battery is disassembled to take out a negative electrode plate, and the negative electrode plate is washed with water, followed by vacuum drying (drying under a pressure lower than atmospheric pressure). The mass of the negative electrode plate is then measured. Thereafter, the negative electrode material containing the negative active material is separated from the negative electrode plate, and the mass of the remaining negative current collector (negative electrode grid) is measured. A difference between the mass of the negative electrode plate and the mass of the negative electrode grid is determined as the mass of the negative electrode material.

The negative electrode material separated from the negative electrode plate is pulverized, and 20 mL of hydrogen peroxide water (concentration: 300 g/L) is added per 100 g of the negative electrode material. Furthermore, nitric acid is added to the mixture, followed by heating the mixture for 5 hours while stirring the mixture. Thus, lead contained in the negative electrode material is dissolved as lead nitrate. Nitric acid obtained by diluting concentrated nitric acid (concentration: 60 mass%) with ion-exchange water is used. The volume ratio of concentrated nitric acid and ion-exchange water is set to 1 : 3. Next, an additive (a carbon material, an organic anti-shrinking agent, barium sulfate, and a reinforcing material and the like) that has remained without being dissolved in nitric acid is separated by filtration, washed with water, and dried, followed by measuring the mass of the additive. A difference between the mass of the negative electrode material and the mass of the additive is determined as the mass of the negative active material.

Hereinafter, a lead-acid battery according to an embodiment of the present invention will be described for every main component requirement, but the present invention is not limited to the following embodiment.

### (Negative Electrode Plate)

A negative electrode plate of the lead-acid battery includes a negative electrode material. The negative electrode plate can usually be composed of a negative electrode grid (negative current collector) and a negative electrode material. The negative electrode material is obtained by removing the negative current collector from the negative electrode plate.

A member such as a mat or pasting paper may be attached to the negative electrode plate. When the negative electrode plate includes such a member (attached member), the negative electrode material is obtained by removing the negative current collector and the attached member. However, the thickness of the electrode plate includes the thickness of the mat. When the mat is attached to the separator, the thickness of the mat is included in the thickness of the separator.

The negative electrode material contains a negative active material (lead or lead sulfate) that develops a capacity in an oxidation-reduction reaction. The negative active material in a charged state is spongy lead, but an unformed negative electrode plate is usually produced using a lead powder. The negative electrode material contains a carbon material and an organic expander. The negative electrode material may further contain barium sulfate and the like, and may contain other additives as necessary.

The content of barium sulfate in the negative electrode material is, for example, preferably 0.1 mass% or more, more preferably 0.2 mass% or more, may be 0.5 mass% or more, may be 1.0 mass% or more, or may be 1.3 mass% or more. Meanwhile, the content is preferably 3.0 mass% or less, more preferably 2.5 mass% or less, and still more preferably 2 mass% or less. These lower limit values and upper limit values can be optionally combined.

Hereinafter, a method for quantifying barium sulfate contained in the negative electrode material will be described. Prior to quantitative analysis, the lead-acid battery that has been formed is fully charged, and then disassembled to obtain a negative electrode plate to be analyzed. The obtained negative electrode plate is washed with water and dried to remove an electrolyte solution in the negative electrode plate. Next, the negative electrode material is separated from the negative electrode plate, to obtain an unpulverized initial sample.

The unpulverized initial sample is pulverized, and 50 ml of (1 + 2) nitric acid is added to 10 g of the pulverized initial sample, followed by heating for about 20 minutes to dissolve a lead component as lead nitrate. Next, the solution containing lead nitrate is filtered to filter solid contents such as a carbonaceous material and barium sulfate.

The obtained solid content is dispersed in water to obtain a dispersion liquid, and components other than the carbonaceous material and barium sulfate (for example, a reinforcing material) are removed by filtration from the dispersion liquid using a sieve. Next, the dispersion liquid is subjected to suction filtration using a membrane filter whose the mass has been measured in advance, and the membrane filter is dried together with the filtered sample in a dryer at 110°C. The filtered sample is a mixed sample of the carbonaceous material and barium sulfate. The mass (A) of the mixed sample is measured by subtracting the mass of the membrane filter from the total mass of the dried mixed sample and membrane filter. Thereafter, the dried mixed sample is put in a crucible together with the membrane filter, and ashed at 700°C or higher. The remaining residue is barium oxide. The mass (B) of barium sulfate is determined by converting the mass of barium oxide into the mass of barium sulfate.

The density of the negative electrode material can be adjusted, for example, within a range of 2.4 to 5 g/cm³. From the viewpoint of reducing the weight of the lead-acid battery, the density of the negative electrode material is preferably 2.4 to 4.0 g/cm³.

The density of the negative electrode material means a value of the bulk density of the fully charged negative electrode material that has been formed, and is measured as follows. The battery that has been formed is fully charged, and then disassembled. The obtained negative electrode plate is washed with water, and dried under vacuum or in an inert gas atmosphere to remove an electrolyte solution in the negative electrode plate. Next, the negative electrode material is separated from the negative electrode plate, to obtain an unpulverized measurement sample. The sample is placed into a measurement case, and vacuum-exhausted. The measurement container is then filled with mercury in a pressure of 0.5 to 0.55 psia, to measure the bulk volume of the negative electrode material. The mass of the measurement sample is divided by the bulk volume, to determine the bulk density of the negative electrode material. A volume obtained by subtracting the injection volume of mercury from the volume of the measurement case is defined as the bulk volume.

The negative current collector may be formed by casting lead (Pb) or a lead alloy, or may be formed by processing a lead or lead alloy sheet. Examples of the processing method include an expanding process and a punching process.

The lead alloy used for the negative current collector may be any of a Pb-Sb-based alloy, a Pb-Ca-based alloy, and a Pb-Ca-Sn-based alloy. The lead or lead alloy may further contain at least one selected from the group consisting of Ba, Ag, Al, Bi, As, Se, and Cu and the like as an additive element.

The negative electrode plate can be formed by filling a negative current collector with a negative electrode paste, followed by curing and drying to produce an unformed negative electrode plate, and thereafter forming the unformed negative electrode plate. The negative electrode paste is produced by adding water and sulfuric acid to a lead powder, an organic expander, a carbon material, and as necessary, various additives, followed by kneading.

Formation can be performed by charging an unformed negative electrode plate in a state where the negative electrode plate is immersed in an electrolyte solution containing sulfuric acid. The formation may be performed in the container after the assembly of the lead-acid battery, or may be performed before the assembly of the lead-acid battery or the element after separately preparing a formation tank that accommodates an electrolyte solution.

### (Positive Electrode Plate)

Examples of the positive electrode plate of the lead-acid battery include pasted type and tubular type positive electrode plates.

The pasted type positive electrode plate includes a positive current collector and a positive electrode material. The positive electrode material is held by the positive current collector. The positive current collector may be formed in the same manner as in the negative current collector, and can be formed by casting lead or a lead alloy or processing a lead or lead alloy sheet.

The tubular type positive electrode plate includes a plurality of porous tubes, a spine inserted into each of the tubes, a current collecting part for connecting the spines, a positive electrode material filled in each of the tubes into which the spine is inserted, and a joint for connecting the plurality of tubes. The spines and the current collecting part that connects the spines are collectively referred to as a positive current collector.

Examples of the lead alloy used for the positive current collector include a Pb-Ca-based alloy, a Pb-Sb-based alloy, and a Pb-Ca-Sn-based alloy. The lead alloy may further contain at least one selected from the group consisting of Ba, Ag, Al, Bi, As, Se, and Cu as an additive element. The positive current collector may have lead alloy layers having different compositions, and a plurality of alloy layers may be provided. For the spine, a Pb-Ca-based alloy and a Pb-Sb-based alloy and the like are used.

The positive electrode material contains a positive active material (lead dioxide, lead sulfate, lead monoxide) that develops a capacity in an oxidation-reduction reaction. The positive electrode material may contain other additives as necessary.

The unformed pasted type positive electrode plate is obtained by filling a positive current collector with a positive electrode paste produced by adding a lead powder, various additives, water, and sulfuric acid, followed by curing and drying. The unformed negative electrode plate is preferably cured at a temperature higher than room temperature and a high humidity. Thereafter, the unformed positive electrode plate is formed.

The tubular type positive electrode plate is formed by filling each of a plurality of tubes into which a spine is inserted with a lead powder or a slurry lead powder, and causing a joint to connect the tubes.

### (Separator)

Usually, a separator is disposed between the negative electrode plate and the positive electrode plate. A nonwoven fabric and a microporous membrane and the like are used for the separator. The thickness and number of separators interposed between the negative electrode plate and the positive electrode plate may be selected depending on an interelectrode distance.

The nonwoven fabric is a mat in which fibers are entangled without being woven, and is mainly composed of the fibers. For example, 60 mass% or more of the separator is formed of fibers. As the fibers, glass fibers, polymer fibers (polyolefin fibers, acrylic fibers, polyester fibers such as polyethylene terephthalate fibers), and pulp fibers and the like can be used. Among these, glass fibers are preferable. The nonwoven fabric may contain components other than the fibers, such as an acid-resistant inorganic powder and a polymer as a binder, and the like.

Meanwhile, the microporous membrane is a porous sheet mainly composed of components other than the fiber component. For example, the microporous membrane is obtained by extruding a composition containing a pore-forming additive (a polymer powder and/or an oil and the like) into a sheet shape, and thereafter removing the pore-forming additive to form pores. The microporous membrane is preferably composed of a material having acid resistance, and is preferably composed mainly of a polymer component. As the polymer component, polyolefins such as polyethylene and polypropylene are preferable.

For example, the separator may be composed of only a nonwoven fabric, or may be composed of only a microporous membrane. The separator may be a laminate of a nonwoven fabric and a microporous membrane, a product obtained by bonding the same types or different types of materials, or a product obtained by engaging unevenness in the same types or different types of materials, as necessary.

### (Electrolyte Solution)

The electrolyte solution is an aqueous solution containing sulfuric acid, and may be gelled as necessary. The specific gravity at 20°C of the electrolyte solution in a fully charged lead-acid battery after formation is, for example, 1.10 g/cm³ to 1.35 g/cm³, and preferably 1.20 g/cm³ to 1.35 g/cm³.

Fig. 1 shows an external appearance of an example of a lead-acid battery according to an embodiment of the present invention.

A lead-acid battery 1 includes a container 12 that accommodates elements 11 and an electrolyte solution (not shown). The container 12 is partitioned into a plurality of cell chambers 14 by a partition 13. One element 11 is accommodated in each cell chamber 14. An opening part of the container 12 is sealed with a lid 15 including a negative electrode terminal 16 and a positive electrode terminal 17. The lid 15 includes a vent plug 18 provided in each cell chamber. At the time of water addition, the vent plug 18 is removed to replenish a water addition solution. The vent plug 18 may have a function for discharging a gas generated in the cell chamber 14 to the outside of the battery.

The element 11 is configured by laminating a plurality of negative electrode plates 2 and a plurality of positive electrode plates 3 with a separator 4 interposed therebetween. Here, the bag-like separator 4 that accommodates the negative electrode plate 2 is shown, but the form of the separator is not particularly limited. In the cell chamber 14 positioned on one end part of the container 12, a negative electrode shelf part 6 that connects lug parts 2a of the plurality of negative electrode plates 2 in parallel is connected to a penetrating connection body 8, and a positive electrode shelf part 5 that connects lug parts 3a of the plurality of positive electrode plates 3 in parallel is connected to a positive pole 7. The positive pole 7 is connected to the positive electrode terminal 17 disposed outside the lid 15. In the cell chamber 14 positioned on the other end part of the container 12, a negative pole 9 is connected to the negative electrode shelf part 6, and the penetrating connection body 8 is connected to the positive electrode shelf part 5. The negative pole 9 is connected to the negative electrode terminal 16 disposed outside the lid 15. Each penetrating connection body 8 passes through a through-hole provided in the partition 13, and connects the elements 11 of the cell chambers 14 adjacent to each other in series.

### EXAMPLES

Hereinafter, the present invention will be specifically described based on Examples and Comparative Examples, but the present invention is not limited to the following Examples.

### <<Lead-Acid Battery A1>>

### (1) Production of Negative Electrode Plate

A lead powder, water, dilute sulfuric acid, barium sulfate, a carbon material, and an organic expander are mixed to obtain a negative electrode paste. The negative electrode paste is filled in a net part of an expanded grid made of a Pb-Ca-Sn-based alloy, cured, and dried to obtain an unformed negative electrode plate. As the carbon material, carbon black (average particle size D₅₀: 40 nm) and graphite (average particle size D₅₀: 110 pm) are used. The amount of the negative electrode paste filled in the expanded grid is adjusted such that the utilization factor of a negative electrode plate that has been formed is set to 40%.

Sodium lignin sulfonate is used as the organic expander. An adjusted additive amount of the organic expander is blended with the negative electrode paste such that the content of the organic expander contained in 100 mass% of a fully charged negative electrode material that has been formed is set to 0.25 mass%. When the negative electrode paste is prepared, the amounts of water and dilute sulfuric acid added to the negative electrode paste are adjusted such that the density of the fully charged negative electrode material that has been formed is set to 4.0 g/cm³. Note that the density of the negative electrode material is determined by fully charging the battery that has been formed in the procedure described above, disassembling the battery, and using the collected measurement sample. The battery is fully charged according to the procedure described above. The density of the negative electrode material is measured by the method described above using an automatic porosimeter (Autopore IV9505) manufactured by Shimadzu Corporation.

### (2) Production of Positive Electrode Plate

A lead powder, water, and sulfuric acid are kneaded to produce a positive electrode paste. The positive electrode paste is filled in a net part of an expanded grid made of a Pb-Ca-Sn-based alloy, cured, and dried to obtain an unformed positive electrode plate.

### (3) Production of Lead-Acid Battery

The unformed negative electrode plate is accommodated in a bag-like separator formed of a polyethylene microporous membrane, and an element is composed of five unformed negative electrode plates and four unformed positive electrode plates per cell. The element is inserted into a container made of polypropylene, and an electrolyte solution is injected into the container. Formation is performed in the container, to produce a flooded-type lead-acid battery. The nominal voltage of the lead-acid battery is set to 12V. The nominal capacity of the lead-acid battery is set to 28 Ah (5 hour rate).

Note that the content (c1 (mass%)) of the organic expander contained in the negative electrode material (100 mass%) taken out from the negative electrode plate is determined for the produced lead-acid battery in the procedure described above. The content of the organic expander thus quantified is a somewhat different value from the content of the organic expander (c2 (mass%)) in the negative electrode material (100 mass%) prepared when the lead-acid battery is produced. Therefore, when the ratio R (= c1/c2) of these contents c1 and c2 is determined in advance, and the negative electrode material used for the negative electrode plate of another lead-acid battery is prepared, the content (c2 (mass%)) of the organic expander in the negative electrode material to be prepared is adjusted by utilizing the ratio R such that the content (c1 (mass%)) of the organic expander in the negative electrode material is set to a predetermined value.

In the present lead-acid battery, the content of a first carbon material is set to 1.0 mass%, and the content of a second carbon material is set to 0.3 mass%. However, these values are determined as the content of each carbon material contained in the negative electrode material (100 mass%) when the negative electrode plate of the produced lead-acid battery is taken out and the carbon material contained in the negative electrode material is separated into the first carbon material and the second carbon material in the procedure described above. A powder resistance ratio R2/R1 is set to 103. The average aspect ratio of the first carbon material is 7.3. A specific surface area ratio S2/S1 is 112. The powder resistance ratio R2/R1, the average aspect ratio of the first carbon material, and the specific surface area ratio S2/S1 are also determined in the procedure described above.

### «Lead Batteries A2 to A6»

Lead-acid batteries are produced in the same manner as in the lead-acid battery A1 except that the additive amount of an organic expander is adjusted such that the content of the organic expander contained in 100 mass% of a fully charged negative electrode material that has been formed is set to values shown in Table 2. Lead Batteries A2 and A6 are not according to the present invention.

### <<Lead-Acid Battery X1>>

As a carbon material, only carbon black (average particle size D₅₀: 40 nm) is used, and the content of a second carbon material is set to 0.3 mass%. Except for the above, a lead-acid battery is produced in the same manner as in the lead-acid battery A1. Lead-Acid Battery X1 is not according to the present invention.

### <<Lead-Acid Battery X2»

As a carbon material, only carbon black (average particle size D₅₀: 40 nm) is used, and the content of a second carbon material is set to 1.0 mass%. Except for the above, a lead-acid battery is produced in the same manner as in the lead-acid battery A1. Lead-Acid Battery X2 is not according to the present invention.

Each lead-acid battery is evaluated as follows.

### [Evaluation 1: PSOC Life Performance]

The lead-acid battery is charged and discharged at 25°C in a pattern shown in Table 1. The number of cycles until a terminal voltage reaches 1.2 V per unit cell is taken as an index of PSOC life performance. This is expressed as a ratio when the result of the lead-acid battery X1 is taken as 100.

**[Table 1]**

| Process | Contents | Test condition | | Temperature (°C) | Remarks |
|---|---|---|---|---|---|
| | | Current or voltage | Truncation condition | | |
| 1 | CC discharge | 1CA | 59 seconds | | |
| 2 | CC discharge | 300A | 1 second | | |
| 3 | CV charge | 2.4 V/cell, maximum of 50 A | 10 seconds | | |
| 4 | CC discharge | 1CA | 5 seconds | | |
| 5 | Repetition of processes 3, 4 | 5 times | - | 40 | 135 seconds (1 cycle) thus far |
| 6 | Repetition of processes 1 to 5 | 50 times | - | | |
| 7 | CV charge | 2.4 V/cell, maximum of 50 A | 900 seconds | | About 2 hours (50 cycles) thus far |
| 8 | Repetition of processes 1 to 7 | 72 times | - | | |
| 9 | Pause | 15 hours | - | | 1 week (3600 cycles) thus far |
| 10 | Return to process 1 | - | - | | |

| | | | | | |
|---|---|---|---|---|---|
| *CC discharge: constant current discharge, CV charge: constant voltage charge | | | | | |

### [Evaluation 2: Low-Temperature High-Rate Performance]

The lead-acid battery is discharged at 6.25 CA at -15°C until the terminal voltage reaches 1 V per unit cell, to determine a discharge time at this time. This discharge time is taken as an index of low-temperature high-rate performance. This is expressed as a ratio when the result of the lead-acid battery X1 is taken as 100.

### [Evaluation 3: Regenerative (Charge) Acceptance Performance]

A fully charged lead-acid battery is discharged by 10% of a nominal capacity at 0.2 CA at 25°C, and then left at room temperature for 12 hours. Next, the battery is charged at a constant voltage of 2.42 V per unit cell. An amount of electricity for first 10 seconds at this time is determined, and taken as an index of regenerative acceptance performance. This is expressed as a ratio when the result of the lead-acid battery X1 is taken as 100.

The evaluation results are shown in Table 2.

**[Table 2]**

| Battery No. | Content of organic expander (mass%) | Content of first carbon material (mass%) | Content of second carbon material (mass%) | Powder resistance ratio R2/R1 | PSOC life performance | Low-temperature high-rate performance | Regenerative acceptance performance |
|---|---|---|---|---|---|---|---|
| X1 | 0.25 | 0 | 0.3 | - | 100 | 100 | 100 |
| X2 | 0.25 | 0 | 1.0 | | 121 | 79 | 108 |
| A2 | 0.01 | 1.0 | 0.3 | 103 | 131 | 83 | 101 |
| A3 | 0.03 | | | | 152 | 100 | 108 |
| A1 | 0.25 | | | | 154 | 103 | 107 |
| A4 | 0.4 | | | | 151 | 111 | 105 |
| A5 | 0.8 | | | | 141 | 118 | 101 |
| A6 | 1.2 | | | | 126 | 120 | 85 |

Even if the organic expander is used, the low-temperature high-rate performance is reduced (X1, X2) in a case where only the second carbon material is used, and the content of the second carbon material is increased to 1.0 mass%, as compared to a case where the content of the second carbon material is 0.3 mass%. In contrast, when the first carbon material and the second carbon material are used in combination, excellent low temperature HR performance and PSOC life performance are obtained by setting the powder resistance ratio R2/R1 within a specific range (A1, A3 to A5). The content of the organic expander may be as small as 0.8 mass% or less, whereby excellent regenerative acceptance performance is obtained (A1, A3 to A5). When the content of the organic expander is more than 0.8 mass%, the regenerative acceptance performance is deteriorated (A6). When the content of the organic expander is less than 0.03 mass%, the low-temperature high-rate performance is deteriorated (A2).

### <<Lead-Acid Batteries B1 to B7»

The additive amount of an organic expander is adjusted such that the content of the organic expander contained in 100 mass% of a fully charged negative electrode material that has been formed is set to 0.01 mass%. A powder resistance ratio R2/R1 is set to values shown in Table 3 by adjusting the average particle size and specific surface area of each carbon material to be used and the average aspect ratio of a first carbon material. Except for the above, a lead-acid battery is produced and evaluated in the same manner as in the lead-acid battery A1. Lead-Acid Batteries B1 to B7 are not according to the present invention.

### <<Lead-Acid Batteries C1 to C7»

The additive amount of an organic expander is adjusted such that the content of the organic expander contained in 100 mass% of a fully charged negative electrode material that has been formed is set to 0.25 mass%. A powder resistance ratio R2/R1 is set to values shown in Table 3 by adjusting the average particle size and specific surface area of each carbon material to be used and the average aspect ratio of a first carbon material. Except for the above, a lead-acid battery is produced and evaluated in the same manner as in the lead-acid battery A1. Lead-Acid Batteries C1 and C7 are not according to the present invention.

### <<Lead-Acid Batteries D1 to D7»

The additive amount of an organic expander is adjusted such that the content of the organic expander contained in 100 mass% of a fully charged negative electrode material that has been formed is set to 0.8 mass%. A powder resistance ratio R2/R1 is set to values shown in Table 3 by adjusting the average particle size and specific surface area of each carbon material to be used and the average aspect ratio of a first carbon material. Except for the above, a lead-acid battery is produced and evaluated in the same manner as in the lead-acid battery A1. Lead-Acid Batteries D1 and D7 are not according to the present invention.

### <<Lead-Acid Batteries E1 to E>>

The additive amount of an organic expander is adjusted such that the content of the organic expander contained in 100 mass% of a fully charged negative electrode material that has been formed is set to 1.2 mass%. A powder resistance ratio R2/R1 is set to values shown in Table 3 by adjusting the average particle size and specific surface area of each carbon material to be used and the average aspect ratio of a first carbon material. Except for the above, a lead-acid battery is produced and evaluated in the same manner as in the lead-acid battery A1. Lead-Acid Batteries E1 and E7 are not according to the present invention.

The evaluation results are shown in Table 3. Note that the lead-acid battery C5 in Table 3 is the lead-acid battery A1.

**[Table 3]**

| Battery No. | Content of organic expander (mass%) | Content of first carbon material (mass%) | Content of second carbon material (mass%) | Powder resistance ratio R2/R1 | PSOC life performance | Low-temperature high-rate performance | Regenerative acceptance performance |
|---|---|---|---|---|---|---|---|
| B1 | 0.01 | 1.0 | 0.3 | 11 | 100 | 80 | 102 |
| B2 | | | | 15 | 123 | 81 | 103 |
| B3 | | | | 57 | 124 | 82 | 102 |
| B4 | | | | 83 | 126 | 83 | 101 |
| B5 | | | | 103 | 131 | 83 | 101 |
| B6 | | | | 152 | 135 | 85 | 99 |
| B7 | | | | 169 | 124 | 85 | 95 |
| C1 | 0.25 | 1.0 | 0.3 | 11 | 118 | 89 | 111 |
| C2 | | | | 15 | 142 | 100 | 111 |
| C3 | | | | 57 | 148 | 101 | 109 |
| C4 | | | | 83 | 152 | 102 | 108 |
| C5 | | | | 103 | 154 | 103 | 107 |
| C6 | | | | 152 | 145 | 105 | 105 |
| C7 | | | | 169 | 128 | 106 | 99 |
| D1 | 0.8 | 1.0 | 0.3 | 11 | 125 | 95 | 103 |
| D2 | | | | 15 | 142 | 113 | 104 |
| D3 | | | | 57 | 145 | 116 | 102 |
| D4 | | | | 83 | 143 | 118 | 101 |
| D5 | | | | 103 | 141 | 118 | 101 |
| D6 | | | | 152 | 138 | 120 | 100 |
| D7 | | | | 169 | 130 | 121 | 98 |
| E1 | 1.2 | 1.0 | 0.3 | 11 | 128 | 105 | 87 |
| E2 | | | | 15 | 130 | 117 | 88 |
| E3 | | | | 57 | 129 | 118 | 87 |
| E4 | | | | 83 | 127 | 120 | 85 |
| E5 | | | | 103 | 126 | 120 | 85 |
| E6 | | | | 152 | 125 | 123 | 80 |
| E7 | | | | 169 | 119 | 124 | 79 |

Excellent PSOC life performance, low-temperature high-rate performance, and regenerative acceptance performance are obtained when the content of the organic expander is within a range of 0.03 mass% or more and 0.8 mass% or less and the powder resistance ratio R2/R1 is within a range of 15 or more and 155 or less (C2 to C6, D2 to D6).

When the content of the organic expander is 0.25 mass%, and the powder resistance ratio R2/R1 is within a range of 80 or more and 110 or less, higher PSOC life performance is obtained (C4, C5). When the content of the organic expander is 0.8 mass%, and the powder resistance ratio R2/R1 is within a range of 50 or more and 85 or less, even higher PSOC life performance is obtained (D3, D4).

### <<Lead-Acid Batteries F1 to F7>>

By adjusting the specific surface area of each carbon material to be used, the specific surface area ratio S2/S1 determined in the procedure described above is set to values shown in Table 4. Except for the above, a lead-acid battery is produced and evaluated in the same manner as in the lead-acid battery A1. The evaluation results are shown in Table 4. Note that the powder resistance ratio R2/R1 is changed within a range of 83 or more and 103 or less by adjusting the specific surface area of each carbon material to be used.

The evaluation results are shown in Table 4. Note that the lead-acid battery F5 in Table 4 is the lead-acid battery A1.

**[Table 4]**

| Battery No. | Content of organic expander (mass%) | Content of first carbon material (mass%) | Content of second carbon material (mass%) | Powder resistance ratio R2/R1 | Specific surface area ratio S2/S1 | PSOC life performance | Low-temperature high-rate performance | Regenerative acceptance performance |
|---|---|---|---|---|---|---|---|---|
| F1 | 0.25 | 1.0 | 0.3 | 83-103 | 16 | 118 | 107 | 100 |
| F2 | | | | | 20 | 134 | 106 | 105 |
| F3 | | | | | 33 | 141 | 106 | 106 |
| F4 | | | | | 40 | 145 | 105 | 105 |
| F5 | | | | | 112 | 154 | 103 | 107 |
| F6 | | | | | 237 | 151 | 103 | 107 |
| F7 | | | | | 376 | 145 | 100 | 101 |

When the specific surface area ratio S2/S1 is within a range of 20 or more and 240 or less, excellent PSOC life performance, low-temperature high-rate performance, and charge acceptance performance are obtained in a well-balanced manner (F2 to F6). When the specific surface area ratio S2/S1 is within a range of 100 or more and 240 or less, PSOC life performance and charge acceptance performance are further improved while low-temperature high-rate performance is maintained (F5, F6).

### <<Lead-Acid Batteries G1 to G7»

By adjusting the aspect ratio of a first carbon material to be used, the average aspect ratio of a first carbon material determined in the procedure described above is set to values shown in Table 6. Except for the above, a lead-acid battery is produced and evaluated in the same manner as in the lead-acid battery A1.

The evaluation results are shown in Table 5. Note that, by adjusting the aspect ratio of the first carbon material to be used, a powder resistance ratio R2/R1 is changed within a range of 83 or more and 103 or less, and a specific surface area ratio S2/S1 is changed within a range of 40 or more and 112 or less. A lead-acid battery G3 in Table 5 is the lead-acid battery A1.

**[Table 5]**

| Battery No. | Content of organic expander (mass %) | Content of first carbon material (mass %) | Content of second carbon material (mass %) | Powder resistance ratio R2/R1 | Average aspect ratio of first carbon material | PSOC life performance | Low-temperature high-rate performance | Regenerative acceptance performance |
|---|---|---|---|---|---|---|---|---|
| G1 | 0.25 | 1.0 | 0.3 | 83-103 | 1 | 121 | 102 | 101 |
| G2 | | | | | 1.5 | 138 | 103 | 105 |
| G3 | | | | | 7.3 | 154 | 103 | 107 |
| G4 | | | | | 16 | 153 | 104 | 108 |
| G5 | | | | | 30 | 149 | 104 | 108 |
| G6 | | | | | 35 | 123 | 103 | 107 |

When the average aspect ratio of the first carbon material is within a range of 1.5 or more and 30 or less, PSOC life performance is further improved while high low-temperature high-rate performance is maintained (G2 to G5).

### <<Lead-Acid Battery H1>>

In the production of a negative electrode plate, a lead-acid battery is produced and evaluated in the same manner as in the lead-acid battery A1 except that the amount of a negative electrode paste filled in an expanded grid is adjusted such that the utilization factor of a negative electrode plate that has been formed is set to 65%.

### <<Lead-Acid Batteries H2 to H7>>

A powder resistance ratio R2/R1 is set to values shown in Table 6 by adjusting the average particle size and specific surface area of each carbon material to be used and the average aspect ratio of a first carbon material. Except for the above, a lead-acid battery is produced and evaluated in the same manner as in the lead-acid battery H1. Lead-Acid Batteries H2 and H7 are not according to the present invention.

### <<Lead-Acid Battery X3>>

As a carbon material, only carbon black (average particle size D₅₀: 40 nm) is used, and the content of a second carbon material is set to 0.3 mass%. Except for the above, a lead-acid battery is produced and evaluated in the same manner as in the lead-acid battery H1. Lead-Acid Battery X3 is not according to the present invention.

The evaluation results are shown in Table 6. The values of PSOC life performance, low-temperature high-rate performance, and regenerative acceptance performance in Table 6 are expressed as ratios when the results of the lead-acid battery X3 are taken as 100.

**[Table 6]**

| Battery No. | Content of organic expander (mass%) | Content of first carbon material (mass%) | Content of second carbon material (mass%) | Powder resistance ratio R2/R1 | PSOC life performance | Low-temperature high-rate performance | Regenerative acceptance performance |
|---|---|---|---|---|---|---|---|
| X3 | 0.25 | 0 | 0.3 | - | 100 | 100 | 100 |
| H2 | | 1.0 | 0.3 | 11 | 118 | 90 | 107 |
| H3 | | | | 15 | 135 | 97 | 109 |
| H4 | | | | 57 | 144 | 101 | 109 |
| H5 | | | | 83 | 151 | 105 | 108 |
| H1 | | | | 103 | 155 | 110 | 106 |
| H6 | | | | 152 | 158 | 114 | 102 |
| H7 | | | | 169 | 135 | 115 | 95 |

Even when the utilization factor of the negative electrode plate is 65%, two types of carbon materials having a powder resistance ratio in a specific range and having different particle sizes are used together with a small amount of organic expander in a specific range, whereby PSOC life performance is improved while low-temperature high-rate performance and regenerative acceptance performance are maintained (H1, H3 to H6).

When the utilization factor of the negative electrode plate is as high as 50% or more, and the powder resistance ratio R2/R1 is within a range of 100 or more, effects of improving the low-temperature high-rate performance and the PSOC life performance are more significantly obtained. The improvement effect of each of the lead-acid batteries H1, H6 (Table 6) having a utilization factor of the negative electrode plate of 65% is greater than that of each of the lead-acid batteries C5, C6 (Table 3) having a utilization factor of the negative electrode plate of 40%.

### INDUSTRIAL APPLICABILITY

The lead-acid battery according to one aspect of the present invention can be applied to valve regulated and flooded-type lead-acid batteries. The lead-acid battery can be suitably utilized as power sources for starting automobiles and motorcycles and the like, and industrial energy storage apparatuses used for natural energy storage and the like.

### DESCRIPTION OF REFERENCE SIGNS

- 1: lead-acid battery
- 2: negative electrode plate
- 2a: lug part of negative electrode plate
- 3: positive electrode plate
- 4: separator
- 5: positive electrode shelf part
- 6: negative electrode shelf part
- 7: positive pole
- 8: penetrating connection body
- 9: negative pole
- 11: element
- 12: container
- 13: partition
- 14: cell chamber
- 15: lid
- 16: negative electrode terminal
- 17: positive electrode terminal
- 18: vent plug

## Claims

1. A lead-acid battery comprising:
a negative electrode plate;
a positive electrode plate; and
an electrolyte solution,
wherein:
the negative electrode plate contains a negative electrode material containing a carbon material and an organic expander;
the carbon material contains a first carbon material having a particle size of 32 pm or more, and a second carbon material having a particle size of less than 32 pm; wherein the particle size of each of the carbon materials is determined based on a size of an opening of a sieve as described in the description;
a ratio of powder resistance R2 of the second carbon material to powder resistance R1 of the first carbon material: R2/R1 is 15 or more and 155 or less; wherein the powder resistance is measured as described in the description;
the first carbon material contains at least graphite, and the second carbon material contains at least carbon black; and
a content of the organic expander in the negative electrode material is 0.03 mass% or more and 0.8 mass% or less;
**characterised in that** the organic expander contains lignosulfonic acid or a salt thereof.

2. The lead-acid battery according to claim 1, wherein a ratio of a specific surface area S2 of the second carbon material to a specific surface area S1 of the first carbon material: S2/S1 is 20 or more; where in the specific surface area is determined as described in the description.

3. The lead-acid battery according to claim 1 or 2, wherein a ratio of a specific surface area S2 of the second carbon material to a specific surface area S1 of the first carbon material: S2/S 1 is 240 or less; where in the specific surface area is determined as described in the description.

4. The lead-acid battery according to any one of claims 1 to 3, wherein an average aspect ratio of the first carbon material is 1.5 or more; wherein the average aspect ratio is obtained as described in the description.

5. The lead-acid battery according to any one of claims 1 to 4, wherein an average aspect ratio of the first carbon material is 30 or less; wherein the average aspect ratio is obtained as described in the description.

6. The lead-acid battery according to any one of claims 1 to 5, wherein a utilization factor of the negative electrode plate is 40% or more, wherein the utilization factor is determined as described in the description.

7. The lead-acid battery according to any one of claims 1 to 6, wherein a utilization factor of the negative electrode plate is 70% or less, wherein the utilization factor is determined as described in the description.

8. The lead-acid battery according to any one of claims 1 to 7, wherein a content of the first carbon material in the negative electrode material is 0.05 mass% or more.

9. The lead-acid battery according to any one of claims 1 to 8, wherein a content of the first carbon material in the negative electrode material is 3.0 mass% or less.

10. The lead-acid battery according to any one of claims 1 to 9, wherein a content of the second carbon material in the negative electrode material is 0.03 mass% or more.

11. The lead-acid battery according to any one of claims 1 to 10, wherein a content of the second carbon material in the negative electrode material is 1.0 mass% or less.

## Patentansprüche

1. Blei-Säure-Batterie, umfassend:
eine negative Elektrodenplatte;
eine positive Elektrodenplatte; und
eine Elektrolytlösung,
wobei:
die negative Elektrodenplatte ein negatives Elektrodenmaterial enthält, das ein Kohlenstoffmaterial und einen organischen Expander enthält;
das Kohlenstoffmaterial ein erstes Kohlenstoffmaterial mit einer Partikelgröße von 32 µm oder mehr und ein zweites Kohlenstoffmaterial mit einer Partikelgröße von weniger als 32 µm enthält; wobei die Partikelgröße jedes der Kohlenstoffmaterialien basierend auf einer Größe einer Öffnung eines Siebes bestimmt wird, wie in der Beschreibung beschrieben;
ein Verhältnis des Pulverwiderstands R2 des zweiten Kohlenstoffmaterials zu dem Pulverwiderstand R1 des ersten Kohlenstoffmaterials: R2/R1 15 oder mehr und 155 oder weniger beträgt; wobei der Pulverwiderstand gemessen wird, wie in der Beschreibung beschrieben;
das erste Kohlenstoffmaterial mindestens Graphit enthält und das zweite Kohlenstoffmaterial mindestens Ruß enthält; und
ein Gehalt des organischen Expanders in dem negativen Elektrodenmaterial 0,03 Massen-% oder mehr und 0,8 Massen% oder weniger beträgt;
**dadurch gekennzeichnet, dass** der organische Expander Lignosulfonsäure oder ein Salz davon enthält.

2. Blei-Säure-Batterie nach Anspruch 1, wobei ein Verhältnis eines spezifischen Flächenbereichs S2 des zweiten Kohlenstoffmaterials zu einem spezifischen Flächenbereich S1 des ersten Kohlenstoffmaterials: S2/S1 20 oder mehr beträgt; wobei der spezifische Flächenbereich bestimmt wird, wie in der Beschreibung beschrieben.

3. Blei-Säure-Batterie nach Anspruch 1 oder 2, wobei ein Verhältnis eines spezifischen Flächenbereichs S2 des zweiten Kohlenstoffmaterials zu einem spezifischen Flächenbereich S1 des ersten Kohlenstoffmaterials: S2/S1 240 oder weniger beträgt; wobei der spezifische Flächenbereich bestimmt wird, wie in der Beschreibung beschrieben.

4. Blei-Säure-Batterie nach einem der Ansprüche 1 bis 3, wobei ein durchschnittliches Seitenverhältnis des ersten Kohlenstoffmaterials 1,5 oder mehr beträgt; wobei das durchschnittliche Seitenverhältnis erhalten wird, wie in der Beschreibung beschrieben.

5. Blei-Säure-Batterie nach einem der Ansprüche 1 bis 4, wobei ein durchschnittliches Seitenverhältnis des ersten Kohlenstoffmaterials 30 oder weniger beträgt; wobei das durchschnittliche Seitenverhältnis erhalten wird, wie in der Beschreibung beschrieben.

6. Blei-Säure-Batterie nach einem der Ansprüche 1 bis 5, wobei ein Nutzungsfaktor der negativen Elektrodenplatte 40 % oder mehr beträgt, wobei der Nutzungsfaktor erhalten wird, wie in der Beschreibung beschrieben.

7. Blei-Säure-Batterie nach einem der Ansprüche 1 bis 6, wobei ein Nutzungsfaktor der negativen Elektrodenplatte 70 % oder weniger beträgt, wobei der Nutzungsfaktor erhalten wird, wie in der Beschreibung beschrieben.

8. Blei-Säure-Batterie nach einem der Ansprüche 1 bis 7, wobei ein Gehalt des ersten Kohlenstoffmaterials in dem negativen Elektrodenmaterial 0,05 Massen-% oder mehr beträgt.

9. Blei-Säure-Batterie nach einem der Ansprüche 1 bis 8, wobei ein Gehalt des ersten Kohlenstoffmaterials in dem negativen Elektrodenmaterial 3,0 Massen-% oder weniger beträgt.

10. Blei-Säure-Batterie nach einem der Ansprüche 1 bis 9, wobei ein Gehalt des zweiten Kohlenstoffmaterials in dem negativen Elektrodenmaterial 0,03 Massen-% oder mehr beträgt.

11. Blei-Säure-Batterie nach einem der Ansprüche 1 bis 10, wobei ein Gehalt des zweiten Kohlenstoffmaterials in dem negativen Elektrodenmaterial 1,0 Massen-% oder weniger beträgt.

## Revendications

1. Batterie au plomb comprenant :
une plaque d'électrode négative ;
une plaque d'électrode positive ; et
une solution électrolytique,
dans laquelle :
la plaque d'électrode négative contient un matériau d'électrode négative contenant un matériau carboné et un détendeur organique ;
le matériau carboné contient un premier matériau carboné présentant une taille de particule supérieure ou égale à 32 µm, et un second matériau carboné présentant une taille de particule inférieure à 32 µm ; la taille de particule de chacun des matériaux carbonés étant déterminée sur la base d'une taille d'une ouverture d'un tamis comme décrit dans la description ;
un rapport de résistance de poudre R2 du second matériau carboné sur la résistance de poudre R1 du premier matériau carboné : R2/R1 est supérieur ou égal à 15 et inférieur ou égal à 155 ; la résistance de poudre étant mesurée comme décrit dans la description ;
le premier matériau carboné contient au moins du graphite et le second matériau carboné contient au moins du noir de carbone ; et
une teneur en détendeur organique dans le matériau d'électrode négative est supérieure ou égale à 0,03 % en masse et inférieure ou égale à 0,8 % en masse ;
**caractérisée en ce que** le détendeur organique contient de l'acide lignosulfonique ou un sel de celui-ci.

2. Batterie au plomb selon la revendication 1, dans laquelle un rapport d'une zone de surface spécifique S2 du second matériau carboné sur une zone de surface spécifique S1 du premier matériau carboné : S2/S1 est supérieur ou égal à 20 ; la zone de surface spécifique étant déterminée comme décrit dans la description.

3. Batterie au plomb selon la revendication 1 ou 2, dans laquelle un rapport d'une zone de surface spécifique S2 du second matériau carboné sur une zone de surface spécifique S1 du premier matériau carboné : S2/S1 est inférieur ou égal à 240 ; la zone de surface spécifique étant déterminée comme décrit dans la description.

4. Batterie au plomb selon l'une quelconque des revendications 1 à 3, dans laquelle un rapport d'aspect moyen du premier matériau carboné est supérieur ou égal à 1,5 ; le rapport d'aspect moyen étant obtenu comme décrit dans la description.

5. Batterie au plomb selon l'une quelconque des revendications 1 à 4, dans laquelle un rapport d'aspect moyen du premier matériau carboné est inférieur ou égal à 30 ; le rapport d'aspect moyen étant obtenu comme décrit dans la description.

6. Batterie au plomb selon l'une quelconque des revendications 1 à 5,
dans laquelle un facteur d'utilisation de la plaque d'électrode négative est supérieur ou égal à 40 %, le facteur d'utilisation étant obtenu comme décrit dans la description.

7. Batterie au plomb selon l'une quelconque des revendications 1 à 6,
dans laquelle un facteur d'utilisation de la plaque d'électrode négative est inférieur ou égal à 70 %, le facteur d'utilisation étant obtenu comme décrit dans la description.

8. Batterie au plomb selon l'une quelconque des revendications 1 à 7, dans laquelle une teneur en premier matériau carboné dans le matériau d'électrode négative est supérieure ou égale à 0,05 % en masse.

9. Batterie au plomb selon l'une quelconque des revendications 1 à 8, dans laquelle une teneur en premier matériau carboné dans le matériau d'électrode négative est inférieure ou égale à 3,0 % en masse.

10. Batterie au plomb selon l'une quelconque des revendications 1 à 9, dans laquelle une teneur en second matériau carboné dans le matériau d'électrode négative est supérieure ou égale à 0,03 % en masse.

11. Batterie au plomb selon l'une quelconque des revendications 1 à 10, dans laquelle une teneur en second matériau carboné dans le matériau d'électrode négative est inférieure ou égale à 1,0 % en masse.
